# EUROPEAN PATENT APPLICATION

(11) **EP 4 557 427 A1**
(43) Date of publication of application: **21.05.2025**
(21) Application number: 23860774.1
(22) Date of filing: 24.08.2023
(51) Int. Cl.: H01M 10/056, H01M 10/0562, H01M 10/052

(54) **COMPOSITE SOLID ELECTROLYTE, METHOD FOR PRODUCING SAME, AND ALL-SOLID-STATE BATTERY INCLUDING SAME**

(30) Priority: 30.08.2022 KR 20220109284
(71) Applicant: LG Chem, Ltd., Yeongdeungpo-gu Seoul 07336 (KR)
(72) Inventor: JEON, Do Yeon, Daejeon 34122 (KR); SON, Byoung Kuk, Daejeon 34122 (KR); LEE, Seong Ho, Daejeon 34122 (KR); PARK, Chang Hun, Daejeon 34122 (KR); MIN, Sang Hyuk, Daejeon 34122 (KR); KIM, In Gyu, Daejeon 34122 (KR); CHUNG, Ha Bin, Daejeon 34122 (KR); LEE, Dong Geon, Daejeon 34122 (KR)
(74) Representative: Hoffmann Eitle
(86) International application number: PCT/KR2023/012522
(87) International publication number: WO 2024/049097

(57) **Abstract**

The present invention aims to improve atmospheric stability of a conventional sulfide-based solid electrolyte, wherein the present invention relates to a composite solid electrolyte which includes sulfide-based solid electrolyte particles; and a polymer coating layer formed on the sulfide-based solid electrolyte particles, wherein a polymer of the polymer coating layer contains a repeating unit represented by Formula I described herein, a method of preparing the same, and an all-solid battery including the composite solid electrolyte.

## Description

### TECHNICAL FIELD

### Cross-reference to Related Applications

This application claims priority from Korean Patent Application No. 10-2022-0109284, filed on August 30, 2022, the disclosure of which is incorporated by reference herein.

### Technical Field

The present invention relates to a sulfide-based composite solid electrolyte with improved atmospheric stability and chemical resistance, a method of preparing the same, and an all-solid battery including the sulfide-based composite solid electrolyte.

### BACKGROUND ART

An all-solid battery is a battery which replaces a liquid electrolyte filling between a positive electrode and a negative electrode of a conventional lithium secondary battery with a solid, wherein, since it has higher energy density than the conventional battery while being safe as there is no risk of explosion, it is attracting attention as a next-generation battery. A solid electrolyte used in the all-solid battery is a material in a solid state which may conduct lithium ions in the battery, wherein it has high ionic conductivity comparable to that of an electrolyte solution currently used in the lithium secondary battery. Core materials constituting the solid electrolyte include a polymer, a sulfide, or an oxide, but, among them, a sulfide-based solid electrolyte with high ductility and ionic conductivity is evaluated as suitable for preparing a high-capacity large battery.

However, since the sulfide-based solid electrolyte is highly reactive to moisture, it has a problem in that it reacts not only with the moisture in the air but also with the moisture in low humidity conditions to generate hydrogen sulfide (H₂S), a harmful gas. Accordingly, the toxic hydrogen sulfide may not only adversely affect safety of workers, but may also degrade performance of the sulfide-based solid electrolyte itself.

Thus, there is a need to develop a sulfide-based solid electrolyte with excellent atmospheric stability and chemical resistance.

### DISCLOSURE OF THE INVENTION

### TECHNICAL PROBLEM

An object of the present invention is to provide a composite solid electrolyte with improved atmospheric stability and chemical resistance.

However, the object of the present invention is not limited to the aforesaid, but other objects not described herein will be clearly understood by those skilled in the art from descriptions below.

### TECHNICAL SOLUTION

In order to solve the above-described tasks, the present invention provides a composite solid electrolyte, a method of preparing the composite solid electrolyte, and an all-solid battery.
(1) The present invention provides a composite solid electrolyte which includes sulfide-based solid electrolyte particles; and a polymer coating layer formed on the sulfide-based solid electrolyte particles, wherein a polymer of the polymer coating layer contains a repeating unit represented by Formula I.

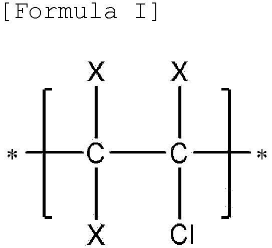

In Formula I,
X is fluorine (F) or chlorine (Cl).

(2) The present invention provides the composite solid electrolyte of (1) above, wherein the polymer of the polymer coating layer contains a repeating unit represented by Formula 1.

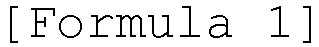

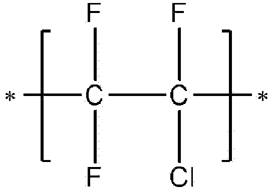

(3) The present invention provides the composite solid electrolyte of (1) or (2) above, wherein the sulfide-based solid electrolyte has an argyrodite-type crystal structure.

(4) The present invention provides the composite solid electrolyte of any one of (1) to (3) above, wherein the polymer of the polymer coating layer has a weight-average molecular weight (Mw) of 1,000 g/mol to 1,000,000 g/mol.

(5) The present invention provides the composite solid electrolyte of any one of (1) to (4) above, wherein the polymer coating layer is included in an amount of 0.1 part by weight to 10 parts by weight based on 100 parts by weight of the sulfide-based solid electrolyte particles.

(6) The present invention provides the composite solid electrolyte of any one of (1) to (5) above, wherein initial ionic conductivity is in a range of 0.001 mS/cm to 20 mS/cm.

(7) The present invention provides the composite solid electrolyte of any one of (1) to (6) above, wherein, when the composite solid electrolyte is exposed to an air atmosphere at a temperature of 25°C and a relative humidity of 0.5% to 0.6%, an amount of hydrogen sulfide (H₂S) generated in first 1 hour is 10cm³ or less per 1 g of the composite solid electrolyte.

(8) The present invention provides a method of preparing the composite solid electrolyte of any one of (1) to (7) above which includes steps of: (A) preparing a mixture by mixing a polymer containing a repeating unit represented by Formula I and a sulfide-based solid electrolyte; and (B) performing a heat treatment on the mixture at a temperature above a melting point of the polymer to form a polymer coating layer on particles of the sulfide-based solid electrolyte.

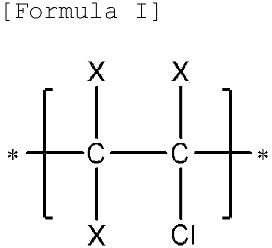

In Formula I,
X is F or Cl.

(9) The present invention provides the method of (8) above, wherein the polymer contains a repeating unit represented by Formula 1.

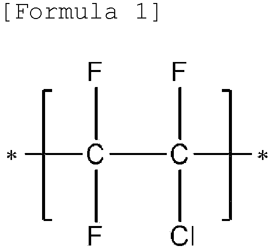

(10) The present invention provides the method of (8) or (9) above, wherein the polymer is mixed in an amount of 0.1 part by weight to 10 parts by weight based on 100 parts by weight of the sulfide-based solid electrolyte in the step (A).

(11) The present invention provides the method of any one of (8) to (10) above, wherein the mixing is dry mixing.

(12) The present invention provides the method of any one of (8) to (11) above, wherein the heat treatment temperature is in a range of 180°C to 250°C.

(13) The present invention provides an all-solid battery including the composite solid electrolyte of any one of (1) to (7) above.

### ADVANTAGEOUS EFFECTS

Since a composite solid electrolyte according to the present invention has a polymer coating layer with excellent atmospheric stability and chemical resistance which is formed on sulfide-based solid electrolyte particles, the composite solid electrolyte itself not only has excellent atmospheric stability, but may also improve chemical resistance in a wet process when a battery is prepared.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In this specification, "*" is a linking portion between repeating units, and, when it is terminal, it is fluorine (F), chlorine (Cl), or hydrogen (H).

### Composite Solid Electrolyte

A composite solid electrolyte according to the present invention includes sulfide-based solid electrolyte particles; and a polymer coating layer formed on the sulfide-based solid electrolyte particles, wherein a polymer of the polymer coating layer contains a repeating unit represented by Formula I below.

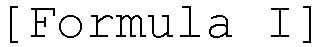

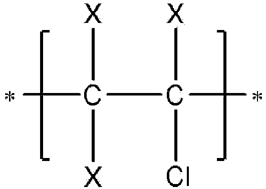

In Formula I,
X is F or Cl.

According to the present invention, the polymer of the polymer coating layer may contain a repeating unit represented by Formula 1 below.

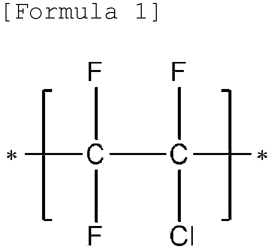

The present inventors found that, with respect to the composite solid electrolyte according to the present invention, since the polymer coating layer with excellent atmospheric stability (excellent moisture and oxygen blocking performance) is formed on the sulfide-based solid electrolyte particles, the composite solid electrolyte itself not only has excellent atmospheric stability, but may also improve chemical resistance in dry and wet processes when a battery is prepared, thereby leading to the completion of the present invention.

In the composite solid electrolyte according to the present invention, since the polymer coating layer includes the polymer containing the repeating unit represented by Formula I, specifically, the polymer containing the repeating unit represented by Formula 1, it may suppress decomposition and degradation of the sulfide-based solid electrolyte particles when exposed to moisture or oxygen. As a result, generation of hydrogen sulfide, a toxic gas, may be suppressed. In addition, a decrease in ionic conductivity of the composite solid electrolyte may be prevented.

In the composite solid electrolyte according to the present invention, since the polymer coating layer includes the polymer containing the repeating unit represented by Formula I, which has lower moisture permeability than a polymer such as PTFE, PDMS, or EVA, specifically, the polymer containing the repeating unit represented by Formula 1, it may better prevent contact of the sulfide-based solid electrolyte particles with moisture.

According to the present invention, in terms of further improving moisture stability, specifically, the polymer may be composed only of the repeating unit represented by Formula 1. That is, the polymer may be polychlorotrifluoroethylene (PCTFE) .

According to the present invention, the sulfide-based solid electrolyte may have an argyrodite-type crystal structure in terms of high ionic conductivity and low reactivity with a lithium negative electrode. The sulfide-based solid electrolyte may be a sulfide-based solid electrolyte containing lithium (Li), phosphorus (P), and sulfur (S).

For example, the sulfide-based solid electrolyte may have a composition represented by Formula 2 below. In this case, the composite solid electrolyte according to the present invention may have high ionic conductivity and may have low reactivity with the lithium negative electrode, and the decomposition and degradation of the sulfide-based solid electrolyte particles when exposed to moisture or oxygen may be suppressed.

[Formula 2] Liₐ(P_{1-b}M_{b})S_{c}X_{d}

In Formula 2,
M is at least one selected from silicon (Si), tin (Sn), niobium (Nb), nickel (Ni), germanium (Ge), gallium (Ga), and aluminum (Al),
X is at least one selected from fluorine (F), chlorine (Cl), bromine (Br), and iodine (I), and
5.0<a<7.5, 0≤b≤0.7, 3.5≤c≤7, and 0.8≤d≤1.7.

M is a doping element doped into the solid electrolyte having the argyrodite-type crystal structure, wherein M may be at least one selected from Sn, Nb, Ni, Ge, Ga, and Al, specifically, at least one selected from Sn, Nb, Ge, and Al.

According to the present invention, the polymer of the polymer coating layer may have a weight-average molecular weight (Mw) of 1,000 g/mol to 1,000,000 g/mol. Specifically, the polymer of the polymer coating layer may have a weight-average molecular weight (Mw) of 1,000 g/mol or more, 200,000 g/mol or less, 500,000 g/mol or less, or 1,000,000 g/mol or less. In a case in which the weight-average molecular weight (Mw) of the polymer is within the above range, since a uniform and thin polymer coating layer may be formed, a moisture blocking effect may be further improved while the decrease in ionic conductivity is minimized.

According to the present invention, the polymer coating layer may be included in an amount of 0.1 part by weight to 10 parts by weight based on 100 parts by weight of the sulfide-based solid electrolyte particles. Specifically, the polymer coating layer may be included in an amount of 0.1 part by weight or more, 0.5 part by weight or more, 5 parts by weight or less, 7 parts by weight or less, and 10 parts by weight or less based on 100 parts by weight of the sulfide-based solid electrolyte particles. In this case, the moisture blocking effect may be improved and the decrease in ionic conductivity may be minimized.

According to the present invention, the composite solid electrolyte may have an initial ionic conductivity of 0.001 mS/cm to 20 mS/cm, specifically, 0.001 mS/cm or more, 0.01 mS/cm or more, 5 mS/cm or less, 10 mS/cm or less, or 20 mS/cm or less. The higher the ionic conductivity of the electrolyte is, the better it is, but, in a case in which the initial ionic conductivity satisfies the above range, an effect of improving moisture stability may be excellent.

The initial ionic conductivity is a value calculated from a resistance value which is measured in a drying room at a temperature of 22°C and a relative humidity of 0.7% immediately after preparation of the composite solid electrolyte. Specifically, the initial ionic conductivity is a value calculated through the following method.
i) Immediately after the preparation of the composite solid electrolyte, 150 mg of composite solid electrolyte powder is taken and put into a SUS mold with a diameter of 13 mm.
ii) After a potentiostat is connected to the SUS mold in a state in which the mold is mounted on a press along with PEEK for insulation, an electrolyte structure is sufficiently densified by pressing at a pressure of 370 MPa, and alternating current impedance measurement is then performed at a measurement frequency of 1 Hz to 7 MHz while the pressure is slowly reduced and maintained at 100 MPa.
iii) Through a Nyquist plot, ionic conductivity is calculated from the measured resistance values.

According to the present invention, when the composite solid electrolyte is exposed to an air atmosphere at a temperature of 25°C and a relative humidity of 0.5% to 0.6%, an amount of hydrogen sulfide (H₂S) generated in first 1 hour may be 10cm³ or less per 1 g of the composite solid electrolyte.

That is, since the composite solid electrolyte according to the present invention has excellent moisture stability, the amount of the hydrogen sulfide, a toxic gas, generated is low and a generation rate is slow, and thus, process safety may be secured.

### Method of Preparing Composite Solid Electrolyte

The composite solid electrolyte according to the present invention may be prepared by coating sulfide-based solid electrolyte particles with a polymer composition which includes a polymer containing a repeating unit represented by Formula I below.

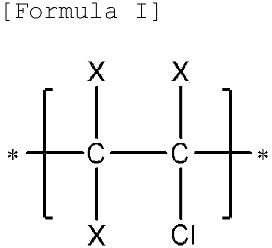

In Formula I,
X is F or Cl.

According to the present invention, the polymer may contain a repeating unit represented by Formula 1 below.

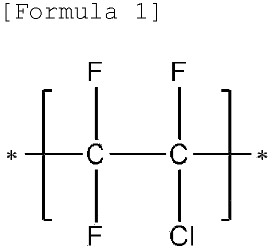

Specifically, a method of preparing a composite solid electrolyte according to the present invention includes the steps of: (A) preparing a mixture by mixing a polymer containing a repeating unit represented by Formula I and a sulfide-based solid electrolyte; and (B) performing a heat treatment on the mixture at a temperature above a melting point of the polymer to form a polymer coating layer on particles of the sulfide-based solid electrolyte.

### Step (A)

Step (A) is a step of preparing a mixture by mixing a polymer containing a repeating unit represented by Formula I (specifically, a polymer containing a repeating unit represented by Formula 1) and a sulfide-based solid electrolyte.

The polymer containing the repeating unit represented by Formula I, the polymer containing the repeating unit represented by Formula 1, and the sulfide-based solid electrolyte are the same as those described in the composite solid electrolyte according to the present invention.

The sulfide-based solid electrolyte, for example, may be synthesized through mechanical milling and solid-phase synthesis. Specifically, the sulfide-based solid electrolyte may be prepared by weighing 3 types of precursors of Li₂S, P₂S₅, and LiCl according to stoichiometry, then mixing them by ball milling, crystallizing the mixed precursor thus obtained by performing a heat treatment, and then grinding again through ball milling. In this case, the mixing, heat treatment, and grinding processes may be performed in an inert gas atmosphere.

According to the present invention, the polymer may be mixed in an amount of 0.1 part by weight to 10 parts by weight based on 100 parts by weight of the sulfide-based solid electrolyte in the step (A). Specifically, the polymer may be mixed in an amount of 0.1 part by weight or more, 1 part by weight or more, 2 parts by weight or more, 6 parts by weight or less, 7 parts by weight or less, or 10 parts by weight or less based on 100 parts by weight of the sulfide-based solid electrolyte. In this case, since a uniform polymer coating layer is formed, a composite solid electrolyte with excellent moisture blocking effect as well as appropriate ionic conductivity may be prepared.

According to the present invention, the mixing may be dry mixing. Specifically, the mixing may be ball milling of the polymer and the sulfide-based solid electrolyte particles. The dry mixing may be performed using a planetary ball mill into which zirconia balls are introduced, and may be performed while rotating at a speed of 100 rpm to 200 rpm for uniform mixing.

### Step (B)

Step (B) is a step of performing a heat treatment on the mixture at a temperature above a melting point of the polymer to form a polymer coating layer on particles of the sulfide-based solid electrolyte. That is, it is a step of melting the polymer to form a polymer coating layer on the sulfide-based solid electrolyte particles.

According to the present invention, the heat treatment temperature may be in a range of 180°C to 250°C, particularly 180°C to 230°C, and more particularly 180°C to 220°C. In this case, since agglomeration of the electrolyte particles may be minimized while the polymer is sufficiently melted, there is an advantage in that a uniform composite solid electrolyte is formed.

The heat treatment may be performed in an inert atmosphere to prevent occurrence of a side reaction.

The heat treatment may be performed for 1 hour to 8 hours, specifically, 1 hour or more, 2 hours or more, 4 hours or less, 5 hours or less, or 8 hours or less in order to minimize the agglomeration of the electrolyte particles while the polymer is sufficiently melted.

### All-Solid Battery

The present invention provides an all-solid battery including the above composite solid electrolyte.

Specifically, the all-solid battery includes a positive electrode including a positive electrode active material, a negative electrode including a negative electrode active material, and a solid electrolyte layer including the composite solid electrolyte according to the present invention which is disposed between the positive electrode and the negative electrode.

Since the all-solid battery according to the present invention has excellent moisture stability, initial efficiency, life characteristics, and output characteristics of the battery may be excellent.

In this case, the all-solid battery of the present invention may be prepared according to a typical method known in the art. For example, the all-solid battery of the present invention may be prepared by stacking and pressing such that the solid electrolyte layer exists between the positive electrode and the negative electrode.

### (1) Positive Electrode

The positive electrode may be prepared by coating a positive electrode current collector with a slurry for a positive electrode which includes a positive electrode active material, a binder, a conductive agent, and a solvent.

The positive electrode current collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, microscopic irregularities may be formed on its surface to improve bonding strength with the positive electrode active material, and the positive electrode current collector may be used in various shapes such as that of a film, a sheet, a foil, a net, a porous body, a foam body, a nonwoven fabric body, and the like.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li (Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium metal oxide may be LiCoO₂, LiMnO₂, LiNiO₂, lithium nickel manganese cobalt oxide (e.g., Li(Ni_{1/3}Mn_{1/3}CO_{1/3})O₂, Li(Ni_{0.6}Mn_{0.2}CO_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, etc.), or lithium nickel cobalt aluminum oxide (e.g., LiNi_{0.8}Co_{0.15}Al_{0.05}O₂, etc.), and, in consideration of a significant improvement effect due to the control of types and content ratios of components constituting the lithium composite metal oxide, the lithium composite metal oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, and any one thereof or a mixture of two or more thereof may be used.

The positive electrode active material may be included in an amount of 60 wt% to 99 wt%, particularly 70 wt% to 99 wt%, and more particularly 80 wt% to 98 wt% based on a total weight of solid content excluding the solvent in the slurry for a positive electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may commonly be included in an amount of 1 wt% to 20 wt%, particularly 1 wt% to 15 wt%, and more particularly 1 wt% to 10 wt% based on the total weight of the solid content excluding the solvent in the slurry for a positive electrode.

The conductive agent is a component for further improving conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, or thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, particularly 1 wt% to 15 wt%, and more particularly 1 wt% to 10 wt% based on the total weight of the solid content excluding the solvent in the slurry for a positive electrode.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, particularly 70 wt% to 95 wt%, and more particularly 70 wt% to 90 wt%.

### (2) Negative Electrode

The negative electrode, for example, may be prepared by coating a slurry for a negative electrode, which includes a negative electrode active material, a binder, a conductive agent, and a solvent, on a negative electrode current collector, or a graphite electrode formed of carbon (C) or a metal itself may be used as the negative electrode.

For example, in a case in which the negative electrode is prepared by coating the slurry for a negative electrode on the negative electrode current collector, the negative electrode current collector generally has a thickness of 3 µm to 500 µm. The negative electrode current collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode current collector, the negative electrode current collector may have fine surface roughness to improve bonding strength with the negative electrode active material, and the negative electrode current collector may be used in various shapes such as a film, a sheet, a foil, a net, a porous body, a foam body, a nonwoven fabric body, and the like.

The negative electrode active material may include at least one negative electrode active material selected from the group consisting of natural graphite, artificial graphite, a carbonaceous material; lithium-containing titanium composite oxide (LTO), silicon (Si), SiOₓ, metals (Me) such as Sn, lithium (Li), zinc (Zn), magnesium (Mg), cadmium (Cd), cerium (Ce), Ni, or Fe; alloys composed of the metals (Me) ; oxides (MeOₓ) of the metals (Me) ; and composites of the metals (Me) and carbon. A silicon-based negative electrode active material including silicon (Si), silicon oxide (SiOₓ), or a silicon alloy may specifically be used as the negative electrode active material. In this case, since a thin and stable SEI layer containing a siloxane bond is formed, high-temperature stability and life characteristics of the battery may be further improved.

The negative electrode active material may be included in an amount of 60 wt% to 99 wt%, particularly 70 wt% to 99 wt%, and more particularly 80 wt% to 98 wt% based on a total weight of solid content excluding the solvent in the slurry for a negative electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, particularly 1 wt% to 15 wt%, and more particularly 1 wt% to 10 wt% based on the total weight of the solid content excluding the solvent in the slurry for a negative electrode.

The conductive agent is a component for further improving conductivity of the negative electrode active material. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, particularly 1 wt% to 15 wt%, and more particularly 1 wt% to 10 wt% based on the total weight of the solid content excluding the solvent in the slurry for a negative electrode.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, specifically, 70 wt% to 90 wt%.

In a case in which the metal itself is used as the negative electrode, the negative electrode may be a metal thin film itself or may be prepared by a method in which the metal is physically bonded, rolled, or deposited on the negative electrode current collector. As the deposition method, an electrical deposition method or a chemical vapor deposition method for the metal may be used.

For example, the metal thin film itself or the metal to be bonded/rolled/deposited on the negative electrode current collector may include one type of metal selected from the group consisting of lithium (Li), nickel (Ni), tin (Sn), copper (Cu), and indium (In) or an alloy of two types of metals.

### (3) Solid Electrolyte Layer

The solid electrolyte layer may further include a binder in addition to the solid electrolyte according to the present invention.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, particularly 1 wt% to 15 wt%, and more particularly 1 wt% to 10 wt% based on a total weight of the solid electrolyte layer.

The present invention provides a battery module including the all-solid battery as a unit cell and a battery pack including the battery module may be provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

### Preparation Example

3 types of precursors, Li₂S, P₂S₅, and LiCl, were dry-mixed (ball-milled) at a molar ratio of 5:1:2. During the dry mixing, a planetary ball mill, into which zirconia balls were introduced, was used and rotated at a speed of 300 rpm to 700 rpm for uniform mixing. Thereafter, the mixed precursor thus obtained was crystallized by performing a heat treatment at 600°C for 12 hours, and then ground again through ball milling to prepare Li₆PS₅Cl powder having an argyrodite-type crystal structure. All of the above processes were performed in an inert argon (Ar) atmosphere.

### Examples and Comparative Examples

### Example 1

A mixture was prepared by dry mixing (ball milling) PCTFE (Mw: 20,000 g/mol), as a polymer, and the Li₆PS₅Cl powder having an argyrodite-type crystal structure, which had been prepared in the preparation example, at a weight ratio of 5:95. During the dry mixing, a planetary ball mill, into which zirconia balls were introduced, was used and rotated at a speed of 100 rpm to 200 rpm for uniform mixing. The mixture was heat-treated in a temperature range of 180°C to 250°C for 2 hours to form a polymer coating layer on the Li₆PS₅Cl particles having an argyrodite-type crystal structure. All of the above processes were performed in an inert Ar atmosphere.

As a result, a composite solid electrolyte, in which the polymer coating layer containing PCTFE was formed on the Li₆PS₅Cl particles having an argyrodite-type crystal structure, was obtained.

### Example 2

A composite solid electrolyte, in which a polymer coating layer containing PCTFE was formed on Li₆PS₅Cl particles having an argyrodite-type crystal structure, was prepared in the same manner as in Example 1 except that PCTFE (Mw: 150,000 g/mol) was used as the polymer instead of the PCTFE (Mw: 20,000 g/mol) .

### Comparative Example 1

The Li₆PS₅Cl powder having an argyrodite-type crystal structure, which had been prepared in the preparation example, was used as a solid electrolyte of Comparative Example 1.

### Comparative Example 2

A composite solid electrolyte, in which a polymer coating layer containing PTFE was formed on Li₆PS₅Cl particles having an argyrodite-type crystal structure, was prepared in the same manner as in Example 1 except that PTFE (Polytetrafluoroethylene) (Sigma-Aldrich) was used as the polymer and the heat treatment was performed at 330°C for 2 hours.

### Comparative Example 3

A composite solid electrolyte, in which a polymer coating layer containing PDMS was formed on Li₆PS₅Cl particles having an argyrodite-type crystal structure, was prepared in the same manner as in Example 1 except that PDMS (JNC Corporation, Silaplane FM-0725) was used as the polymer.

### Comparative Example 4

A composite solid electrolyte, in which a polymer coating layer containing EVA was formed on Li₆PS₅Cl particles having an argyrodite-type crystal structure, was prepared in the same manner as in Example 1 except that EVA (Ethylenevinyl acetate copolymer) (Sigma-Aldrich) was used as the polymer.

**[Table 1]**

| Category | Polymer type | Weight-average molecular weight (Mw) (g/mol) |
|---|---|---|
| Example 1 | PCTFE | 20,000 |
| Example 2 | PCTFE | 150,000 |
| Comparative Example 1 | - | - |
| Comparative Example 2 | PTFE | - |
| Comparative Example 3 | PDMS | 10,000 |
| Comparative Example 4 | EVA | - |

### Experimental Example 1: Initial Ionic Conductivity Evaluation

Immediately after the preparation of the composite solid electrolyte powders of Examples 1 and 2, 150 mg of each composite solid electrolyte powder was taken and put into a SUS mold with a diameter of 13 mm. A potentiostat was connected to the SUS mold in a state in which the mold was mounted on a press along with PEEK for insulation. After an electrolyte structure was sufficiently densified by pressing at a pressure of 370 MPa, alternating current impedance measurement was performed at a measurement frequency of 1 Hz to 7 MHz while the pressure was slowly reduced and maintained at 100 MPa. Through a Nyquist plot, ionic conductivity was calculated from the measured resistance values and presented in Table 2 below. All measurements were conducted in a drying room at a temperature of 22°C and a relative humidity of 0.7%.

**[Table 2]**

| Category | Initial ionic conductivity (mS/cm) |
|---|---|
| Example 1 | 2.20 |
| Example 2 | 2.10 |

Referring to Table 2, it may be confirmed that the composite solid electrolytes of Examples 1 and 2 according to the present invention had initial ionic conductivity at a level capable of operating a battery.

### Experimental Example 2: Evaluation of Hydrogen Sulfide Gas Generation Amount

5 mg of each of the composite solid electrolytes of Examples 1 and 2, the solid electrolyte of Comparative Example 1, and the composite solid electrolyte powders of Comparative Examples 2 to 4 was taken and was left standing in a glove box equipped with a hydrogen sulfide sensor (in a dry air atmosphere controlled at a temperature of 25°C and a relative humidity of 0.59%) for more than 1 hour. Through an amount of hydrogen sulfide generated for 1 hour immediately after being left standing, an amount of hydrogen sulfide generated per 1g of the composite solid electrolyte was calculated, and presented in Table 3 below.

**[Table 3]**

| Category | Amount of hydrogen sulfide (H₂S) generated in first 1 hour (cm³) |
|---|---|
| Example 1 | 5.98 |
| Example 2 | 6.30 |
| Comparative Example 1 | 26.05 |
| Comparative Example 2 | 11.12 |
| Comparative Example 3 | 16.34 |
| Comparative Example 4 | 13.20 |

Referring to Table 3, with respect to the composite solid electrolytes of Examples 1 and 2 according to the present invention, it may be confirmed that the amounts of the hydrogen sulfide, a toxic gas, generated were less than those of the solid electrolytes of the comparative examples, and, accordingly, it may be confirmed that the composite solid electrolytes of Examples 1 and 2 according to the present invention had better moisture stability.

Thus, with respect to the composite solid electrolyte according to the present invention, since the polymer coating layer included the polymer containing the repeating unit represented by Formula I described herein, it may be understood that decomposition and degradation of the sulfide-based solid electrolyte particles during moisture or oxygen exposure may be suppressed. As a result, it may be understood that the composite solid electrolyte according to the present invention itself not only had excellent atmospheric stability, but may also secure process safety in dry and wet processes when a battery is prepared.

## Claims

1. A composite solid electrolyte comprising:
sulfide-based solid electrolyte particles; and
a polymer coating layer formed on the sulfide-based solid electrolyte particles,
wherein a polymer of the polymer coating layer comprises a repeating unit represented by Formula I: 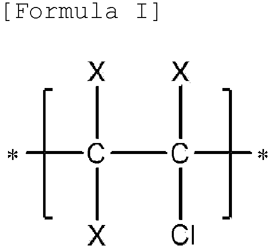
wherein, in Formula I,
X is fluorine (F) or chlorine (Cl).

2. The composite solid electrolyte of claim 1, wherein the polymer of the polymer coating layer comprises a repeating unit represented by Formula 1:

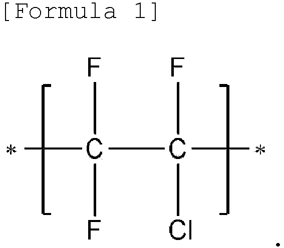

3. The composite solid electrolyte of claim 1, wherein the sulfide-based solid electrolyte has an argyrodite-type crystal structure.

4. The composite solid electrolyte of claim 1, wherein the polymer of the polymer coating layer has a weight-average molecular weight (Mw) of 1,000 g/mol to 1,000,000 g/mol.

5. The composite solid electrolyte of claim 1, wherein the polymer coating layer is included in an amount of 0.1 part by weight to 10 parts by weight based on 100 parts by weight of the sulfide-based solid electrolyte particles.

6. The composite solid electrolyte of claim 1, wherein initial ionic conductivity is in a range of 0.01 mS/cm to 20 mS/cm.

7. The composite solid electrolyte of claim 1, wherein, when the composite solid electrolyte is exposed to an air atmosphere at a temperature of 25°C and a relative humidity of 0.5% to 0.6%, an amount of hydrogen sulfide (H₂S) generated in first 1 hour is 10cm³ or less per 1 g of the composite solid electrolyte.

8. A method of preparing the composite solid electrolyte of claim 1, the method comprising steps of:
(A) preparing a mixture by mixing a polymer containing a repeating unit represented by Formula I and a sulfide-based solid electrolyte; and
(B) performing a heat treatment on the mixture at a temperature above a melting point of the polymer to form a polymer coating layer on particles of the sulfide-based solid electrolyte: 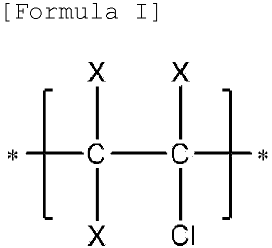 wherein, in Formula I,
X is fluorine (F) or chlorine (Cl).

9. The method of claim 8, wherein the polymer comprises a repeating unit represented by Formula 1:

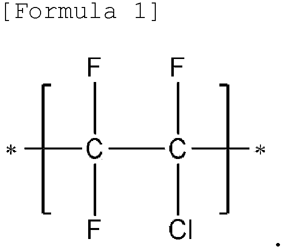

10. The method of claim 8, wherein the polymer is mixed in an amount of 0.1 part by weight to 10 parts by weight based on 100 parts by weight of the sulfide-based solid electrolyte in the step (A).

11. The method of claim 8, wherein the mixing is dry mixing.

12. The method of claim 8, wherein the heat treatment temperature is in a range of 180°C to 250°C.

13. An all-solid battery comprising the composite solid electrolyte of any one of claims 1 to 7.
